# EUROPEAN PATENT SPECIFICATION

(11) **EP 1 689 658 B1**
(45) Date of publication and mention of the grant of the patent: **22.07.2009**
(21) Application number: 03773995.0
(22) Date of filing: 17.11.2003
(51) Int. Cl.: B65D 85/78, B65D 77/20, A23G 9/04

(54) **PACKING AND PRESENTATION OF ICE-CREAM IN THE OF SCOOPS**
VERPACKUNG UND PRÄSENTATION VON SPEISEEIS IN DEN SCHÖPFLÖFFELN
NOUVEAU PROCEDE DE CONDITIONNEMENT ET DE PRESENTATION DE CREME GLACEE ET DE DESSERTS

(43) Date of publication of application: 16.08.2006
(73) Proprietor: Shaik, Kareemullah, Secunderabad 500 003 (Andhra Pradesh) (IN)
(72) Inventor: SHAIK, Kareemullah, Andhra Pradesh (IN); SHAIK, Faheemulla, Andhra Pradesh (IN); SHAHEEN, Fathima, Andhra Pradesh (IN)
(74) Representative: Keilitz, Wolfgang
(86) International application number: PCT/IN2003/000360
(87) International publication number: WO 2005/047140

(56) References cited:
- EP-A1- 0 216 107
- FR-A1- 2 713 208
- JP-A- 3 030 635
- JP-A- 9 002 562
- JP-A- 49 066 858

## Description

### FIELD OF THE INVENTION

The present invention is directed to a system and method for dressing the ice-cream and dessert or such related products from the similar category such as the Dairy, Non Dairy, Frozen ice-cream, Frozen Dessert, Soft serve desserts and the likes. More specifically, the present invention is directed to a system and method for dressing the ice-cream & Desserts as mentioned above for enhancing the commercial viability of the product further. Hence, the end product gains a commercial cutting edge against the already existing process used by the present system in comparison with the latest invention of system and method for dressing the ice-creams and desserts.

### BACKGROUND OF THE INVENTION:

Milk products is a natural source of energy for all age groups, better if the fats and calories are in a proportionate low quantity, specially for grown ups, but still is regarded as one of the best sources of energy for the body requirements, the same applying to ice-cream and dessert and the likes. It has been enjoyed from centuries and a lot of changes have occurred as of date.

And still everyone looks for more exciting things happening to it, as time goes by and will be well accepted, the present innovation is a combination of all that. However, not without the system and method of dressing of the scoop from the compatible container system. On the other hand it is quick, hygienic, ever fresh maintainable state of product, user friendly even if it is a non-professional (Amateur) person handling it, thus giving a consistent result all the time, where the scope of acceptance and growth of such parlor are high. It also offers a reliable accountability. To address this different issues, even the early pioneers of ice-cream and dessert industries with parlor throughout the country could manage a few parlors with great difficulties in each city due to its speculatively less profitability and constant burden of skilled management staff, storage of huge quantity of flavors of ice creams and dessert in relation to its moment of brisk sales or not, on even wastage and real estate cost.

In comparison to earlier days, today the cold chain exists in a manner, which one can never believe that the end product is reached from manufacturer to consumer as fresh as it was produced, thanks to all the technological development with which the present system and method for dressing can do wonders to the ice-cream and dessert manufacturing industry and domestic market as well.

A perplexing task that has somewhat stifled the use of different products (i.e. ice-cream, desserts and various dressing) as of date is that they were looked upon as parallel products, competing in the same sector for their share of market, by using the innovative systems and method for dressing. It tends to give you the profits & advantages of a combined product, also enhancing the commercial value of the products, as of the present innovation.

The method & system of dressing is a combination of two different ice-creams or dessert or similar combination of one dessert & ice-creams together, thus bringing it under one portfolio. In the light of the price of the same product (i.e. product means or represents all types of frozen dessert, frozen ice cream, soft serve and the likes) produced by the existing parlors; to effectively match the costing during peak hours, peak seasons, lean hours, lean seasons, to effectively make up for the lean hours & lean seasons. As a consequence of the product cost, over staff and high maintenance, during the lean hour sales, the size of the parlor & real estate cost plus the average turnover recorded on a annual basis and high income in season and low income in-off season, the short duration of the summer season and unreliable sales at some times even during the seasons has limited the proliferation of such parlors. This is where the present invention fits in the gap and gives a phenomenal business, which is left untapped. Furthermore, the commercial cost of the end product will be greatly reduced.

With the past and present practice, as a consequence in many instances the parlors declined, some are running on no-loss, no-profit basis, some are run by the Company for the sake of their image, and interestingly some parlors turned into fast food joints, making ice-cream and dessert their secondary business.

Nevertheless, being a nation of ice-cream lovers, the volume kept the business in good health of the existing parlors, with the present system.

As recognized by the present invention there are several drawbacks associated with the system adopted by the parlors. First it should be recognized, that at the end of the day, the number of scoops scooped should be proportionate, the quantity determined per scoop, (i.e. if it is 'X' no. of scoops to a gallon of ice-cream or dessert), the system should reflect the accountability as to how many scoops of different flavors have gone into different types of sundaes served, are you able to track & match your cost as calculated, it also means there has to be a continuous balance between the input and output in such a system, hence this is the system that is employed to coordinate the consumption of different flavors of ice-cream & dessert consumed in different sundae's equally.

Also a consistent shape, quantity and quality of product is delivered on a continuous basis.

In the present conventional systems, there is a lot of disparity from what you calculate as cost & what you practically get; there is an unseen loss by way of number of scoops effecting your profitability.

Inconsistent portions are served every time if the staff is not a thorough professional, sincere to their job all the time, monitoring the count at every stage, present all the time to deliver such results of accountability on all counts. Such an instance is not possible. In some instances, such loss of quantity or pilferage of ice-cream or dessert are considered as an average loss added to the cost and switched over to the customer, raising the retail cost and burdening the customers.

Many parlors or ice-cream joints exist, with the present adopted system, the cost goes up by 3 to 5. They do deserve to price their product as such, because they provide with such ambience and facilities as you are enjoying your ice-cream. However they cannot operate in the many locations in the same area, thus making their parlors not commercially viable in many numbers, compared to this innovation of more reliable & less costly method, system and infrastructure.

More particularly these days, the ice-cream is sold in fancy containers like toys, balls etc., in which the ice-cream is filled and stored for selling where in the end product is a toy left for the children to play.

More elaborate models and varieties of ice cream & soft serve keep coming into the market, to keep up with the competitions. But too many manufacturers with similar products share the market. However similar, they are all accepted. The innovative method deals with the similar product in an entirely different manner, thus creating an together different market.

### DISADVANTAGES

Parlors have their own way of handling the product and making their own sundaes. Generally, the parlor management stocks 10 to 20 varieties of bulk packs (a gallon each) taking a huge space, and consumption of power to run the display freezer. The ice cream is scooped out as per order at different intervals, each time the ice cream being scooped with a scooper. Every time there is a change in the staff personnel, each person has its style of scooping fluctuating in size, quantity, effecting the economic of the product price. Due to slight unclean handling, it effects the hygiene of the product sometimes or most of the time due to longer exposure of the product to different temperature and moisture, distortion & ice flakes in the product, appearance, also taste difference.

Hence, a fluctuation in number of scoops, hygiene, presentation and taste, at time's inconsistent product delivery.

### NEW ART

Out of all various ways of ice-cream presentation & sales, the most preferred are exotic Sundaes, whose availability is restricted to parlors only, that too full fledged professionally handled parlors with time limitations and location.

In parlors with sitting Customers, one has to wait or go back if the parlor is full, sales have a limitations: when there is no rush, the seats are empty but the maintenance remains the same.

In take away counters, customers drive in and pick up all their choices of stuff and drive away. There is a phenomenal unseen business, without limitations or volume of sales, minimum customer demands, the counter can be open as per peak hour timings only, if suitable.

Hence, new opportunities and growth exists. Immense potential can be' explored by innovation, keeping in mind the local food habits and tastes.

It deals with the same products in a different manner. The ice-cream is not in bulks, accountable in numbers, less handling, consistent in shape & quantity, completely hygienic. It takes less space in the parlors, less power.

The innovation has more compatibility can be portable, can be installed any-where with the lowest expense and the product can be delivered in a very short time comparatively and can be made by an Amateur and served instantly.

Dessert can be made and served at any corner shop, mall, resort, hotels with minimum space, inventory and can be served to a maximum number of customers, more varieties in minimum time with less professional handling staff like (Dessert making master).

With special dispensing cabinets for commercial market, special concept of this method for domestic market, this area of segment can experience a phenomenal acceptability and success.

### ADVANTAGES

System and Method for Dressing the ice cream & dessert produced for enhancing the commercial value and extending its compatibility in maximum area where its potential is present, a part of the ingredient produced in a unique shape suitable to produce the same appearance of the ice-cream and dessert available.

Hence, the important thinking is the way it is assembled and produced to its original appearance, with less time and lesser professional staff, at a lower cost.

### OBJECTIVES OF THE INVENTION:

The present description of the invention is not intended to be limited to the discussion in the following few paragraphs in this section, but rather is a synopsis of selected facets of the present invention. A more complete understanding of the present invention should be construed in the light of this entire document. Nevertheless, an object of the present invention is to address the above identified and other shortcomings of conventional system against the Compatible Container Technology.

Another feature of the present invention is to provide a system and method for dressing the ice cream & desserts, and the like, converting the already premium product in power product (i.e. a Power product giving the extra revenue power to the manufacturer, the dealer and most importantly the extra buying power to the consumer for its comparative cost difference).

Another feature of the present invention is to provide a system and method for dressing the products to bring various ice-creams, dessert soft serves and the like under one portfolio, giving more revenue & low cost production.

Another feature of the present invention is to deliver consistent quality, quality, shape, smoothness and taste in the sundaes, dessert and the likes all the time.

Another feature of the present invention is to act as a walking parlor, which is low costing and can be moved into any odd place at odd times to deliver its performance during single day concerts, meetings, carnivals or crowded places.

Another feature of this invention is considering the complete infrastructural cost, as it is economically viable to run only during the peak hours and close in during the rest of the lean hours, like commercial office areas busy during the lunch & evening hours, the parks and crowded during the evening hour, hence all the other costs, to save by not operating during the lean hours. "Manpower" is also saved, the lean hour costs not eating into your peak hour profits.

Another feature of this invention is to proliferate such parlor on wheels selling premium sundaes like the "Hot dog" Vendors all over the potential areas.

Another feature of this invention is that, since the sales potential of ice-cream and the likes hugely varies from different seasons and also unexpected bad weather which may vary daily & seasonally, come what may this present innovation, system & method is both reliable in terms of short variation, long term reliability, as well as during peak hours.

Another feature of this invention is to enable making a sundae at home, much more quickly and easily, thus a potential product can penetrate into the domestic market to cater to personal parties, birthdays and the likes.

Another feature of this invention is that it involves low cost production, hence the end product reaches the customer at a proportionally low cost price, giving the customer all the benefits and at the same time good profit to the dealer, and to the manufacturer the best returns and a product profile.

Another feature of the invention is to have a Kiosk concept for the method, enabling self employed entrepreneurs to start their business opportunity with low investment by which further scope for employment is generated.

### DESCRIPTION OF THE DRAWINGS

A more complete appreciation of the invention and many of the attendant advantages thereof will be readily obtained as the same becomes better understood by reference to the following detailed description when considered in connection with the accompanying drawings.

More elaborate designs have been developed to make ice creams and desserts more competitive with other type of ice creams and the likes in the market; once again the system is based on the containers used in Figures.

According to the attached figures, 1 is the single scoop packed in a peelable container with outer packing of box. 2 is the peelable scoop-container. 3 is the product filling area. 4 is the female outer cover. 5 is the male container holding scoop. 6 is showing the top inlet to fill the product in the container. 7 is variation of a scoop surface designs proposed. 8 is tray to hold several scoop products. 9 is the product holding area. 10 is the product filling area. 11 is a side view of a tray holding several scoops. 12 is one of the lid packing of the variables. 13 is peelable scoop container with variable of perforation. 14 is peelable scoop holding container surface. 15 is one of the view of a peelable container with product exposed. 16 is a scoop ready to use prepared in a container. 17 is a frozen scoop topped with soft served dessert.. 18 is container holding the entire product ready to be served. 19 is female container of more than one scoop, also acting as a serving disposable container. 20 are scoop products to hold more than one scoop. 21 is peelable male container strong enough to hold more than one scoop. 22 is one of the variations of spacer to penetrate inside the product to create an internal pressure & external surface design as per the surface container design. 23 is a container to allow different shapes when spacer is inserted. 24 is a complete container showing product with spacer. 25 is one of the variations of external designs created when the spacer is completely inserted. 26 is a variation of spacer inserted in a container to create a semi-scoop. 27 is surface showing a semi-scoop shape created due to the insertion of a spacer. 28 is downwards pressure of the spacer. 29 is the arrow showing the upward pressure of the product lifting upwards due to the spacer's, downward pressure.

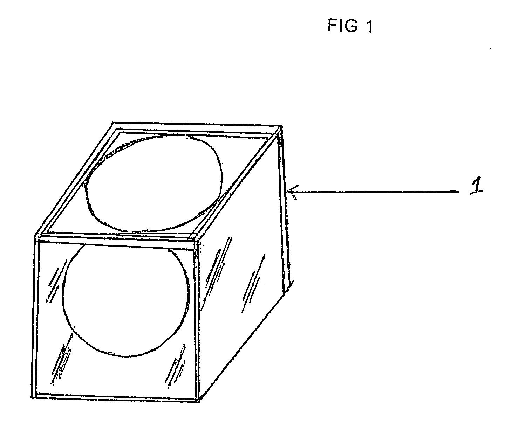

Figure 1: shows the packing of the single scoop in packed form with outer packing box.

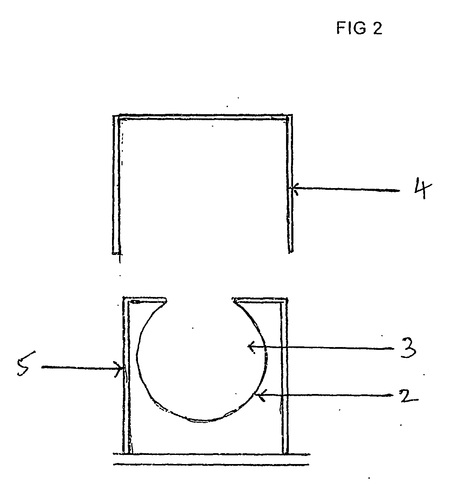

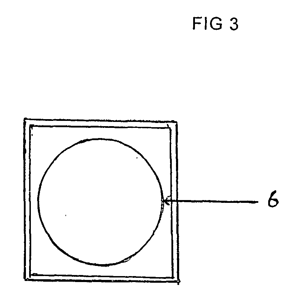

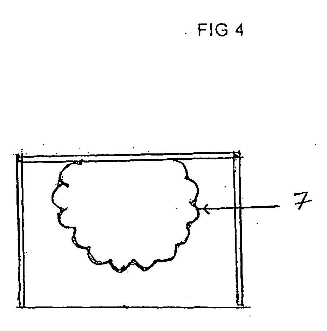

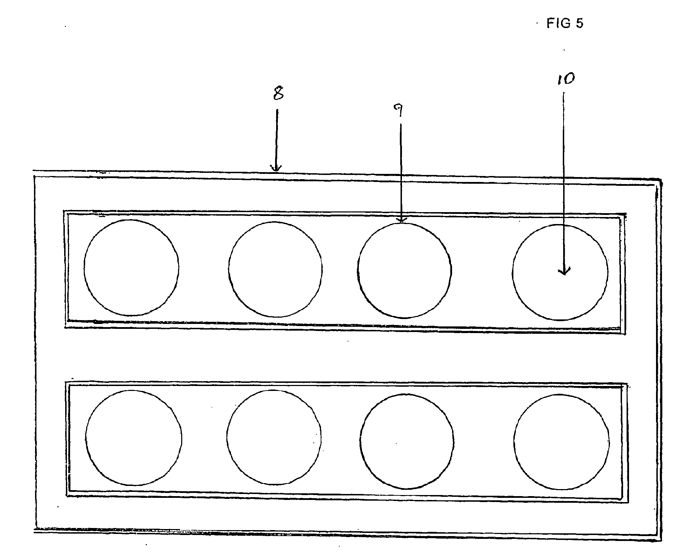

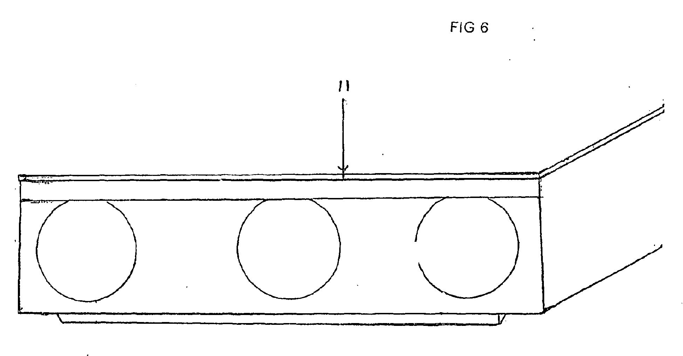

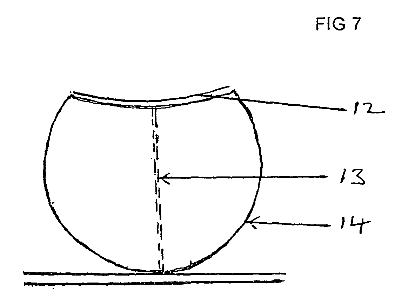

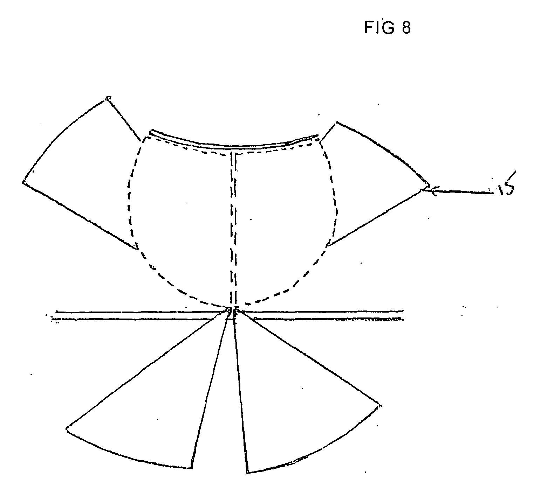

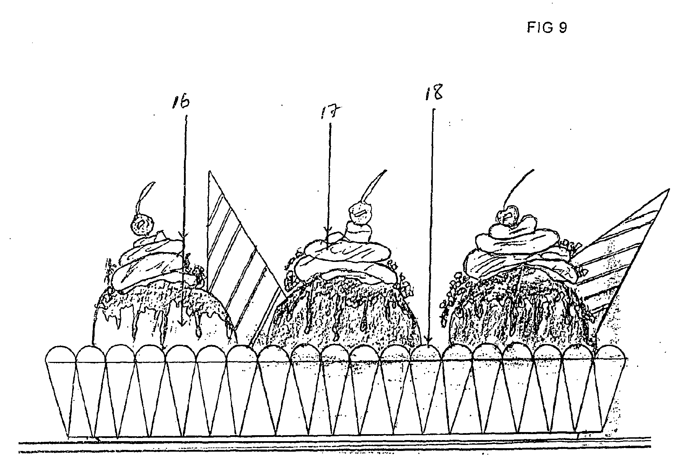

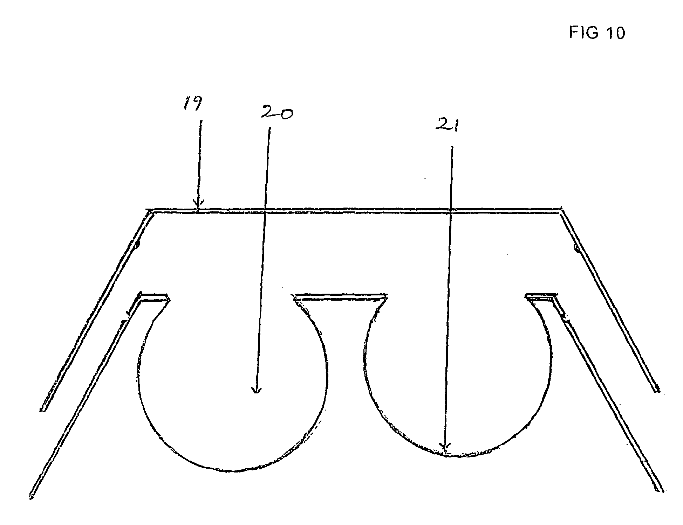

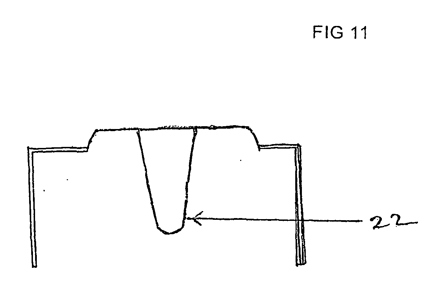

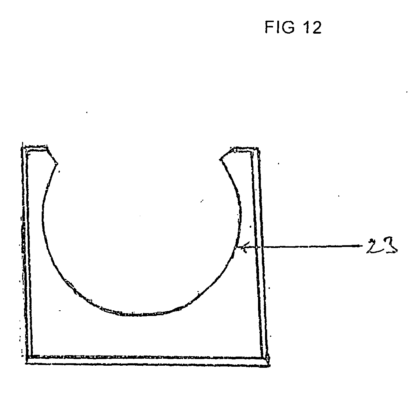

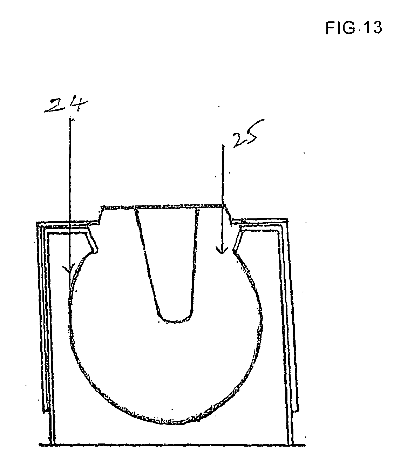

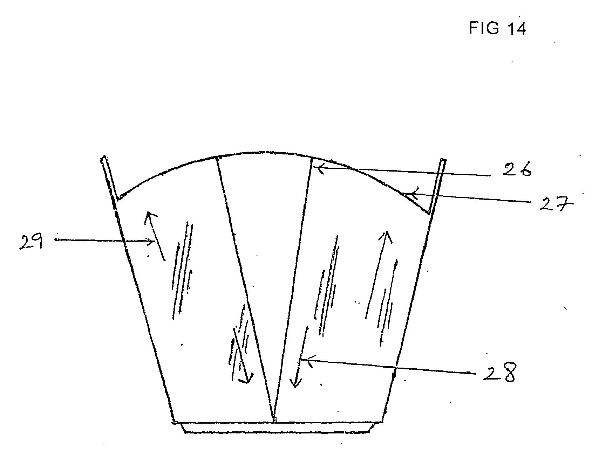

Figure 2: shows the packing of the single scoop when the packing is separated into outer container and inner container. Figure 3: shows the over-view of the inner packing area which shows the product filling area. Figure 4: shows the transverse section of the inner packing area with product filling area, which shows a different inner scoop surface. Figure 5: shows the inner container holding the space for multiple scoops showing the product filling and holding area. Figure 6: shows the side view or transverse view of the packing with outer and inner containers holding multiple scoops. Figure 7: shows the inner packing of the single scoop with outer peelable area, which is made of with or without perforated peelable cover. Figure 8: shows the view of a peeled container with product exposed. Figure 9: shows the container holding the entire product ready to be served. Figure 10: shows the outer container of more than one scoop, which also acts as a disposable serving container. Figure 11 : shows one of the variables of spacer to penetrate inside the product to create an internal pressure and external surface design. Figure 12: shows the inner container to allow a different shape when the spacer inserted. Figure 13: shows the complete container with the spacer inserted. Figure 14: shows one of the variations of external designs created when the spacer is completely inserted.

### DETAILED DESCRIPTION

The description of the invention includes the method of packing & presentation of the ice cream & desserts. As discussed extensively in the background and the objectives of the invention, the invention relates to a novel packing & presentation of the ice cream & dessert, which makes the preparation easier and simpler.

The packing of the scoop has two containers (4 & 5), one being the inner container (5) also called the male container and the other being the outer container (4) also called the female container.
The outer cover (4) is placed on the inner container (5) for closing the products. The outer container (4) is a hard container, which is used as the serving container (18) for the products or scoop. The products in the inner container (5) are placed in the outer container (4 or 19) by reversing the inner container into the outer container. Necessary topping (17) is done in this container and looks like a bowl or acts like a container for the scoops or the products for serving.

The inner container is peelable (13) having the space for the product to be filled in the container. When the outer container (4) is removed to consume the scoops or product the skin of the container is peeled off along the perforated grooves or without the perforated grooves (13) by which the product in the form of scoop is exposed. The exposed scoops or product are placed in the outer container by reversing the inner container by which the product in the shape of the scoops is placed in the outer container for consumption.

The product thus placed is topped with the necessary nut, soft serve and fruits for decorative appearance and is consumed. The shape of the scoops that are placed in the outer container depends upon the inner container shape (7), as shown in the figures.

Further to get more flavored scoops with inner placed dry fruits or gel or other products, a spacer (22) is inserted into the space provided for the product. The spacer (22) which is attached to the outer cover is placed when the product is filled in the inner container. When this spacer is inserted (25) by pacing the outer container, the spacer (25) pierces into the product by downward pressure (28) by which creating an upward pressure (29) in the product by which a semi scoop (27) is formed on the top.

## Claims

1. System for packaging a product such as ice cream or a dessert, **characterized by** an inner box-shaped container (5) having side walls, a top wall and a substantially open bottom wall, at least one scoop-like area (3) extending downwardly from opening(s) in the top wall to contain the product, the wall(s) of said areas (3) provided with perforated grooves (13) to allow peeling them off to allow access to the product, further comprising an outer box-shaped container (4) having side walls, a top wall and an open bottom, adapted to fit over the inner container thereby closing it and usable to serve the product once the said wall(s) is/are peeled off.

2. System for packaging a product such as ice cream or a dessert according to claim 1, wherein the inner container (5) has different shapes for different shapes of scoops.

3. System for packaging a product such as ice-cream or a dessert according to anyone of claims 1 or 2, wherein a spacer (22) is attached to the outer container (4) creating an internal pressure in the product contained in the inner container (5), whereby the product takes the surface design of the inner container (5).

4. System for packaging a product such as ice cream or a dessert according to anyone of claims 1 to 3, wherein the inner container (5) and the outer container (4) hold multiple scoops.

5. Method for packaging an ice cream or a dessert, **characterized in that** the ice cream or the dessert is packaged in a system as claimed in any of the claims 1 to 4.

6. Method for presenting an ice cream or a dessert, **characterized in that** the ice-cream or the dessert is presented in a system as claimed in any of the claims 1 to 4, the outer container (4) being used as a serving container. ,

## Patentansprüche

1. System für das Verpacken eines Produktes wie Eiscreme oder einen Nachtisch, **gekennzeichnet durch** einen inneren kastenförmigen Behälter (5) mit seitlichen Wänden, eine obere Wand und eine im wesentlichen offene untere Wand, mindestens einen Schöpfkelle-artigen Bereich (3) abwärts dehnend von den Öffnungen in der oberen Wand um das Produkt zu fassen, die Wände der besagten Bereiche (3), versehen mit perforierten Rillen (13), um abstreifen und **dadurch** Zugang zum Produkt zu erlauben, weiter - einen bestehend aus einem äußeren kastenförmigen Behälter (4) mit seitlichen Wänden, eine obere Wand und eine offene Unterseite, angepasst um den inneren Behälter aufzulegen und ihn **dadurch** zu schließen und verwendbar um das Produkt zu servieren, sobald die Wand/Wände abgestreift wird/werden.

2. System für das Verpacken eines Produktes wie Eiscreme oder einen Nachtisch entsprechend Anspruch 1, worin der innere Behälter (5) verschiedene Formen für verschiedene Formen des Eiskugels hat.

3. System für das Verpacken eines Produktes wie Eiscreme oder einen Nachtisch entsprechend jedem Beliebigen Anspruch 1 oder 2, worin eine Distanzscheibe (22) an dem äußeren Behälter befestigt wird (4), der einen internen Druck im Produkt verursacht, welches im inneren Behälter (5) enthalten ist, wodurch das Produkt den Oberflächenentwurf des inneren Behälters (5) annimmt.

4. System für das Verpacken eines Produktes wie Eiscreme oder einen Nachtisch entsprechend jedem Beliebigen Anspruch 1 bis 3, worin der innere Behälter (5) und der äußere Behälter(4) mehrere Eiskugeln halten.

5. Methode für das Verpacken einer Eiscreme oder eines Nachtisches, **gekennzeichnet dadurch ,dass** die Eiscreme oder der Nachtisch in einem System,wie festgestellt in jedem Beliebigen Anspruch 1 bis 4,verpackt wird.

6. Method für die Präsentierung einer Eiscreme oder eines Nachtisches, **gekennzeichnet dadurch ,dass** die Eiscreme oder der Nachtisch in einem System,wie behauptet in jedem Beliebigen Anspruch 1 bis 4, vorgelegt wird,dabei wird der äußere Behälter (4),als Bedienungsgefäß verwendet.

## Revendications

1. Système d'emballage d'un produit de type glace ou dessert, **caractérisé par** un conteneur intérieur en forme de boîte (5) possédant des parois latérales, un couvercle et une paroi de fond en grande partie ouverte, au moins un espace arrondie (3) descendant à partir de la / des ouverture(s) dans le couvercle pour contenir le produit, la/les paroi(s) (3) desdites zones pourvu(e)s de rainures (13) pour permettre de les enlever afin de pouvoir accéder au produit, comprenant de plus un conteneur extérieur en forme de boîte (4) possédant des parois latérales, un couvercle et un fond ouvert, adapté de sorte à s'emboiter sur le conteneur intérieur de façon à le fermer et utilisable pour servir le produit une fois ladite/lesdites paroi(s) enlevée(s).

2. Système d'emballage d'un produit de type glace ou dessert selon la réclamation 1, où le conteneur intérieur (5) a des formes différentes pour différentes formes de espaces arrondies.

3. Système d'emballage d'un produit de type glace ou dessert selon l'une des réclamations 1 ou 2, où un espaceur (22) est relié au conteneur extérieur (4), créant une pression interne dans le produit contenu par le conteneur intérieur (5), par laquelle le produit prend la forme de la surface du conteneur intérieur (5).

4. Système d'emballage d'un produit de type glace ou dessert selon l'une des réclamations 1 à 3, où le conteneur intérieur (5) et le conteneur extérieur (4) contiennent plusieurs types d'espaces arrondies.

5. Méthode d'emballage d'une glace ou d'un dessert, **caractérisé par le fait que** la glace ou le dessert est emballé dans un système comme précisé dans les réclamations 1 à 4.

6. Méthode de présentation d'une glace ou d'un dessert, **caractérisée par le fait que** la glace ou le dessert est présenté dans un système comme précisé dans les réclamations 1 à 4, le conteneur extérieur (4) étant utilisé comme conteneur de service.
